# EUROPEAN PATENT SPECIFICATION

(11) **EP 3 863 160 B1**
(45) Date of publication and mention of the grant of the patent: **24.07.2024**
(21) Application number: 20828747.4
(22) Date of filing: 22.04.2020
(51) Int. Cl.: H02K 13/04, H02K 13/10, H02K 15/02

(54) **COMMUTATOR AND PRODUCTION METHOD**
KOMMUTATOR UND HERSTELLUNGSVERFAHREN
COMMUTATEUR ET SON PROCÉDÉ DE PRODUCTION

(30) Priority: 12.12.2019 CN 201911288987
(43) Date of publication of application: 11.08.2021
(73) Proprietor: Shenzhen Kaizhong Precision Technology Co., Ltd., Pingshan District Shenzhen Guangdong 518118 (CN)
(72) Inventor: HU, Yong, Shenzhen, Guangdong 518118 (CN); CHEN, Lei, Shenzhen, Guangdong 518118 (CN)
(74) Representative: Laufhütte, Dieter
(86) International application number: PCT/CN2020/086093
(87) International publication number: WO 2021/114544

(56) References cited:
- EP-A1- 3 190 690
- WO-A1-2004/013945
- CN-A- 1 672 310
- CN-A- 105 703 553
- CN-A- 108 448 830
- CN-A- 110 957 864
- CN-U- 202 503 418
- CN-U- 205 017 178
- CN-U- 206 727 760
- JP-A- 2004 040 855
- JP-A- 2007 300 705
- JP-A- 2008 154 368
- JP-A- 2008 206 346

## Description

### TECHNICAL FIELD

The present application relates to the technical field of commutator, in particular to a commutator and a production method thereof.

### BACKGROUND

Commutator, as one of main components of brush motor, is widely used in electric motor. With the increasing number and variety of gas and electronic equipment, the electromagnetic environment is becoming even more complex and is prone to electromagnetic interference.

During the running of a micromotor, electric sparks and electrical noises are produced on the surfaces of the carbon brush and commutator. In order to eliminate the high-frequency electrical noises and meet the requirements of electromagnetic compatibility standards of micro DC motors, these noises must be processed. The current solution is to install ring-shaped varistorring-shaped varistors such as ring-shaped varistors at the commutator segments and coils of micromotor.

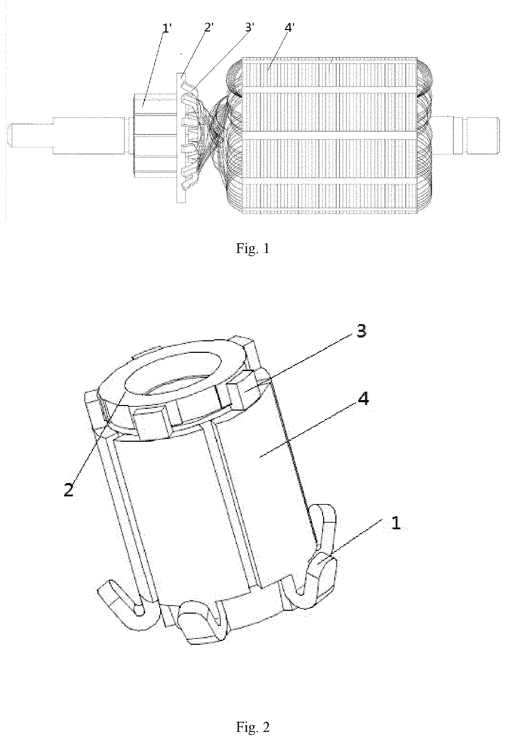

In actual production, as shown in Fig. 1, the winding of a rotor 4' is firstly wound on a wire hanging part 3' of a commutator 1' to connect the commutator 1' with the rotor coil, then an ring-shaped varistor 2', such as a ring varistor, is sleeved on the commutator 1' and welded with the wire hanging part 3' on the commutator 1', and the winding is between the ring-shaped varistor 2' and the wire hanging part 3'. This connection has the following defects:
1. The ring-shaped varistor 2' is installed after the winding of the coil, that is, the installation of ring-shaped varistor 2' has a specific sequence with respect to the winding process, which is not conducive to optimizing the production process and rationally allocating production resources.
2. The ring-shaped varistor 2' is installed after connection of the commutator 1' and the rotor 4', and with a large-sized rotor 4', it is difficult to realize automatic production, and the ring-shaped varistor 2' is usually installed manually, leading to low production efficiency.
3. In the manual welding process, the winding is located between the ring-shaped varistor 2' and the hanging part 3', hence the coil connected with the hanging part 3' may be touched by mistake, which reduces the performance of the motor.

WO2004/013945A1 discloses a drum commutator for an electric machine, comprising a sleeve-like support member made from insulating molding compound, a plurality of metal conductor segments disposed thereon in evenly spaced manner around the commutator axis, with terminal lugs disposed thereon at the ends, and an annular interference-suppression disk, which is connected in electrically conductive manner to the conductor segments in the region of the ends opposite the terminal lugs. JP2008-206346A relates to a brushed DC motor used as an actuator for various in-vehicle devices and a method for assembling the commutator. JP2004-040855A relates to a motor used as a drive source for various devices. JP2007-300705A discloses an electric motor including a motor yoke provided with a field portion on an inner surface, an armature including a rotating shaft and a plurality of armature windings and rotatably accommodated in the motor yoke. EP3190690A1 relates to a motor commutator, and particularly to a ring varistor-based method for reducing electromagnetic interference of a motor, a corresponding motor commutator and the motor.

### SUMMARY

Therefore, the present application provides a commutator and a production method to solve the defects of the above connection mode.

The invention provides a commutator as defined in claim 1 and a production method according to claim 3. A commutator according to the invention comprises a body, wherein the body is a cylindrical structure with a shaft hole in the middle and includes a plurality of commutator segments distributed along the circumference thereof, two ends of each of the commutator segments are respectively connected with a wire hanging part and a connector, a plurality of connectors are arranged around an axis of the body and on one side of the body away from the wire hanging parts, and a ring-shaped varistor is mounted on the plurality of connectors, characterized in that, one side of the connector facing the axis is connected with an outer surface of the ring-shaped varistor, the circumferential dimension of the connector along the body is smaller than that of the commutator segment, and the height of the connector in the direction of the axis of the body is smaller than the height of the ring-shaped varistor in the direction of the axis of the body

Each of the commutator segments and the corresponding connector are integrally formed.

The invention further provides a production method applied to the above commutator, wherein the ring-shaped varistor is first connected to the commutator, before the wire hanging part of the commutator is connected to a rotor coil.

The present application has the beneficial effects that:
1. the commutator of the present application comprises a body, which is provided with a wire hanging part, and a connector for mounting a ring-shaped varistor is arranged on one side of the body far from the wire hanging part. Compared with the prior art, the ring-shaped varistor is arranged on one side of the body far from the wire hanging part in the present application, so that the installation of the ring-shaped varistor has no specific sequence with respect to the winding process, and can be carried out at the same time, or the ring-shaped varistor can be connected with the connector first, and then the winding of the rotor can be wound on the wire hanging part of the commutator, thus facilitating the optimization of the production process and rational allocation of production resources, and ensuring the performance of the micromotor, as the ring-shaped varistor will not accidentally touch the coil during installation; when the ring-shaped varistor is installed on the connector on the body, the commutator has a smaller size than the rotor, and the connectors can be used as a tooling fixture, it is easy to realize automatic installation, which greatly improves the production efficiency.
2. In the commutator of the present application, the connector is L-shaped, and two side walls thereof are connected with ring-shaped varistor which is located between the connector and the body, so that the ring-shaped varistor is firmly connected with the body, and the connector acts as a tooling fixture.
3. In the commutator of the present application, the ring-shaped varistor is provided with clamping grooves, the connectors are inserted into the corresponding clamping grooves to be connected with the ring-shaped varistor, allowing the ring-shaped varistor to be firmly connected with the body, and the connector acts as a tooling fixture.
4. In the commutator of the present application, the commutator segment and the connector are integrally formed, which is convenient for processing and production, and improves the connection strength between the commutator segment and the connector.
5. In the production method of the present application, the ring-shaped varistor is connected with the commutator, and then the wire hanging part of the commutator is connected with the rotor coil, so that the ring-shaped varistors and the commutator are small in size and easy to realize automatic welding.

### BRIEF DESCRIPTION OF THE DRAWINGS

In order to make a clearer description of technical solutions in specific implementations of the present application or prior art, drawings involved in description for the specific implementations or the prior art will be briefly introduced, and apparently, the drawings described below illustrate some implementations of the present application, for one with ordinary skill in the art, other drawings can also be obtained in accordance with these drawings without delivering creative efforts.
Fig. 1 is a structural diagram of a commutator connected with ring-shaped varistors in the prior art:
Fig. 2 is a structural diagram of a commutator of the invention.
Fig. 3 is a structural diagram of a first embodiment that is not part of the invention.
Fig. 4 is a structural diagram of a second embodiment which is part of the invention.
Fig. 5 is a structural diagram of a third embodiment which is not part of the invention.
Fig. 6 is a structural diagram of a fourth embodiment which is not part of the invention.

### Description of reference numerals:

1'- commutator; 2'- ring-shaped varistor; 3'-wire hanging part; 4'- rotor; 1-wire hanging part; 2- ring-shaped varistors; 3- connector; 4-commutator segment; 5- clamping groove.

### DETAILED DESCRIPTION

Technical solutions of the present application will be described clearly and completely as follows in conjunction with the drawings, apparently, the described embodiments are just part rather than all embodiments of the present application. Based on the embodiments in the present application, all other embodiments obtained by one with ordinary skill in the art without departing from the scope of the appended claims shall fall into the protection scope of the present application.

In the description of the present application, it should be noted that, unless specified and defined otherwise, the terms of "installation", "interconnection" and "connection" shall be understood in a broad sense, for example, a fixed connection, a removable connection, an integral connection, a mechanical connection, an electrical connection, a direct connection, an indirect connection via intermediate medium, or further, internal communication between two elements. Case-by-case interpretation can be made to the above terms in the present application by one with ordinary skill in the art.

In addition, technical features involved in the described different implementations of the present application can be combined with each other in the case of no contradictions.

The commutator as shown in Fig. 2-6, comprises a body provided with a wire hanging part 1, and a plurality of connectors 3 for mounting a ring-shaped varistorring-shaped varistor 2 are provided on one side of the body far away from the wire hanging part 1, and arranged around an axis of the body. Compared with the prior art, the ring-shaped varistor 2 in the present application is arranged on one side of the body far away from the wire hanging part 1. There is no specific sequence between the installation of ring-shaped varistor 2 and the winding process, and the two processes can be carried out at the same time, or the ring-shaped varistor 2 can be connected to the connector first, before the winding of the rotor is wound on the wire hanging part 1 of the commutator, so it is convenient to optimize the production process, rationally allocate production resources, and the ring-shaped varistor 2 will not touch the coil by mistake during installation, thus ensuring the performance of the micromotor. When the ring-shaped varistor 2 is installed on the connector 3 on the body, because the commutator has a smaller size than the rotor, and the connector 3 can act as a tooling fixture, it is easy to realize automatic installation, which greatly improves the production efficiency. It should be pointed out that the ring-shaped varistor 2 in this embodiment is a varistor, with an annular structure.

The body is a cylindrical structure with a shaft hole in the middle, which includes a plurality of commutator segments 4 distributed along the circumference thereof, two ends of the commutator segments 4 are respectively connected with the connector and the wire hanging part 1, and the commutator segment 4 and the connector 3 are integrally formed.

One side of the connector 3 facing the axis is connected with the outer surface of the ring-shaped varistor 2, and the circumferential dimension of the connector 3 along the body is smaller than that of the commutator segment 4.

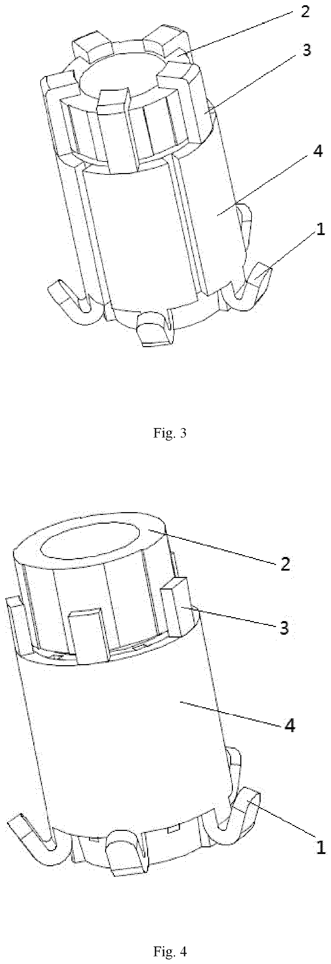

As shown in Fig. 3, as a first alternative embodiment, the connector 3 is L-shaped, and both side walls of the connector 3 are connected with the ring-shaped varistor 2, so that the ring-shaped varistor 2 is firmly connected with the body, and the connector 3 acts as a tooling fixture.

As shown in Fig. 4, according to the invention, the height of the connector 3 along the axis of the body is smaller than that of the ring-shaped varistor 2 along the axis of the body.

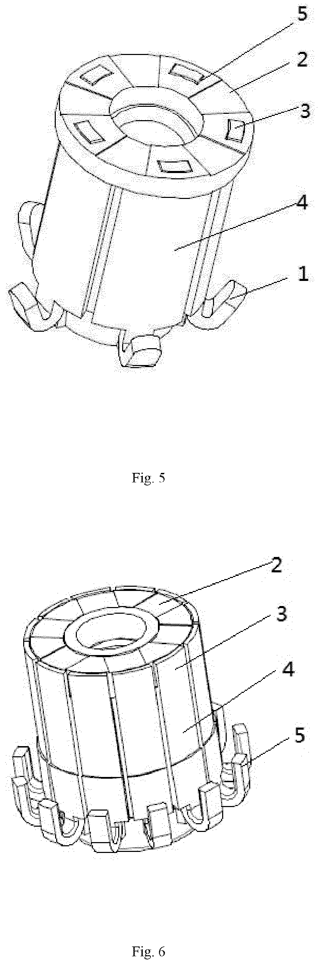

As shown in Fig. 5, as a third alternative embodiment, the ring-shaped varistor 2 is provided with clamping grooves 5 which are uniformly distributed along the axial direction of the body, and the connectors 3 are inserted into the corresponding clamping grooves 5 to connect with the ring-shaped varistor 2, so that the ring-shaped varistor 2 is firmly connected with the body, and the connectors 3 acts as a tooling fixture.

As shown in Fig. 6, as a fourth alternative embodiment, the connector 3 has the same size as the commutator segment 4 along the circumferential direction of the body.

In use, the varistor on the commutator of this embodiment can significantly improve EMC electromagnetic compatibility between electronic devices, ensure the normal operation of various electronic devices, and meet people's requirements for high quality and high standard of electronic products.

The production method of the commutators mentioned above is described below. Firstly, the ring-shaped varistor 2 is connected with the commutator, and then the wire hanging part 1 of the commutator is connected with the rotor coil. The ring-shaped varistor 2 and commutator are small in size and easy to realize automatic welding. In the prior art, micro-motor manufacturers generally purchase rotors, commutators and ring-shaped varistors from different upstream suppliers. Firstly, the rotor is connected with the commutator, and the wire hanging part arranged on the commutator is connected with the rotor coil, and then the ring-shaped varistor is sleeved on the commutator to be welded to the wire hanging part thereof. As the micro-motor manufacturer has to install ring-shaped varistorring-shaped varistors independently, the production efficiency of the micro-motor is reduced; after adopting the present production method, the micro-motor manufacturer can directly purchase the commutators described above, improving the production efficiency of the micro-motor.

Obviously, the above embodiments are merely intended to clearly illustrate rather than limit the numerated implementations. For one with ordinary skill in the art, other different forms of modifications or changes may further be made on the basis of the aforementioned descriptions. It is unnecessary and impossible to exhaust all implementations. And modifications or changes derived herefrom and falling within the scope of the appended claims obviously fall into the protection scope of the present application.

## Claims

1. A commutator, comprising a body, wherein the body is a cylindrical structure with a shaft hole in the middle and includes a plurality of commutator segments (4) distributed along the circumference thereof, two ends of each of the commutator segments (4) are respectively connected with a wire hanging part (1) and a connector (3), a plurality of connectors (3) are arranged around an axis of the body and on one side of the body away from the wire hanging parts (1), and a ring-shaped varistor (2) is mounted on the plurality of connectors (3),
one side of the connector (3) facing the axis is connected with an outer surface of the ring-shaped varistor (2), the circumferential dimension of the connector (3) along the body is smaller than that of the commutator segment (4), **characterised in that**
the height of the connector (3) in the direction of the axis of the body is smaller than the height of the ring-shaped varistor (2) in the direction of the axis of the body.

2. The commutator according to claim 1, **characterized in that** each of the commutator segments (4) and the corresponding connector (3) are integrally formed.

3. A production method, **characterized in** being applied to the commutator of claim 1 or 2, wherein the ring-shaped varistor (2) is first connected to the commutator, before the wire hanging part (1) of the commutator is connected to a rotor coil.

## Patentansprüche

1. Kommutator, umfassend einen Körper, wobei der Körper eine zylindrische Struktur mit einem Schaftloch in der Mitte ist und eine Vielzahl von Kommutatorsegmenten (4) beinhaltet, die entlang dessen Umfang verteilt sind, wobei zwei Enden jedes der Kommutatorsegmente (4) jeweils mit einem Drahtaufhängungsteil (1) und einem Verbinder (3) verbunden sind, wobei eine Vielzahl von Verbindern (3) um eine Achse des Körpers und auf einer von den Drahtaufhängungsteilen (1) abgewandten Seite des Körpers angeordnet sind, und wobei ein ringförmiger Varistor (2) auf der Vielzahl von Verbindern (3) montiert ist,
wobei eine Seite des Verbinders (3), die der Achse zugewandt ist, mit einer Außenfläche des ringförmigen Varistors (2) verbunden ist,
wobei die Umfangsabmessung des Verbinders (3) entlang des Körpers kleiner als die des Kommutatorsegments (4) ist, **dadurch gekennzeichnet, dass**
die Höhe des Verbinders (3) in Richtung der Achse des Körpers kleiner als die Höhe des ringförmigen Varistors (2) in Richtung der Achse des Körpers ist.

2. Kommutator nach Anspruch 1, **dadurch gekennzeichnet, dass** jedes der Kommutatorsegmente (4) und der entsprechende Verbinder (3) einstückig ausgebildet sind.

3. Herstellungsverfahren, **dadurch gekennzeichnet, dass** es auf den Kommutator nach Anspruch 1 oder 2 angewendet wird, wobei der ringförmige Varistor (2) zuerst mit dem Kommutator verbunden wird, bevor das Drahtaufhängungsteil (1) des Kommutators mit einer Rotorspule verbunden wird.

## Revendications

1. Commutateur comprenant un corps, dans lequel le corps est une structure cylindrique avec un trou d'arbre au centre et qui comporte une pluralité de segments de commutateur (4) répartis le long de la circonférence de celui-ci, deux extrémités de chacun des segments de commutateur (4) sont reliées respectivement à une partie de suspension de fil (1) et à un connecteur (3), une pluralité de connecteurs (3) sont disposés autour d'un axe du corps et un côté du corps éloigné des parties de suspension de fil (1) et d'un varistor (2) en forme de bague est montée sur la pluralité de connecteurs (3),
un côté du connecteur (3) tourné vers l'axe est relié à une surface extérieure du varistor (2) en forme de bague,
la dimension circonférentielle du connecteur (3) le long du corps est inférieure à celle du segment de commutateur (4), **caractérisé en ce que**
la hauteur du connecteur (3) dans la direction de l'axe du corps est plus petite que la hauteur du varistor (2) en forme de bague dans la direction de l'axe du corps.

2. Commutateur selon la revendication 1, **caractérisé en ce que** chacun des segments de commutateur (4) et le connecteur (3) correspondant sont formés intégralement.

3. Procédé de production, **caractérisé en ce qu'**il est appliqué au commutateur selon la revendication 1 ou 2, dans lequel le varistor (2) en forme de bague est relié en premier lieu au commutateur avant que la partie de suspension de fil (1) du commutateur ne soit reliée à une bobine de rotor.
